# EUROPEAN PATENT SPECIFICATION

(11) **EP 3 353 702 B1**
(45) Date of publication and mention of the grant of the patent: **05.05.2021**
(21) Application number: 16849888.9
(22) Date of filing: 26.09.2016
(51) Int. Cl.: G06F 21/60, G06F 21/62, H04L 29/06

(54) **DISTRIBUTED BIG DATA SECURITY ARCHITECTURE**
SICHERHEITSARCHITEKTUR FÜR VERTEILTE GROSSE DATENMENGEN
ARCHITECTURE DE SÉCURITÉ DE DONNÉES VOLUMINEUSES RÉPARTIES

(30) Priority: 25.09.2015 US 201562233153 P
(43) Date of publication of application: 01.08.2018
(73) Proprietor: T-Mobile USA, Inc., Bellevue, WA 98006-1350 (US)
(72) Inventor: PEPPE, Brett C., Bellevue, Washington 98006-1350 (US); REITH, Gregory C., Bellevue, Washington 98006-1350 (US)
(74) Representative: Swindell & Pearson Limited
(86) International application number: PCT/US2016/053827
(87) International publication number: WO 2017/053992

(56) References cited:
- WO-A1-2014/130920
- US-A1- 2006 232 826
- US-A1- 2014 283 107
- US-A1- 2014 373 104
- US-B1- 8 938 775
- US-B2- 8 285 983
- US-B2- 8 322 610

## Description

### BACKGROUND

Traditional information technology (IT) architecture have relied on centralized computing structures, whereby all or most of the processing and computing is performed on a central server. Centralized computing can enable the deployment of central server computing resources, administration, and management. Typically, computational processing involves the extraction, transformation and loading of a resultant data feeds by the centralized computing structure.

However, cost and performance inefficiencies of centralized computing structures have steered IT architectures towards decentralized computing structures, whereby data feeds are extracted, uploaded to a decentralized computing platform and then transformed. Doing so provides cost and performance efficiencies since the infrastructure to perform the computational processing can be outsourced to an entity that specializes in such.

As decentralized computing develops, both the velocity and diversity of data can cause some security measures to have an impact on latency, scalability, and recovery performance. Thus, security can be viewed as a service constraint. Thus there is a need to balance security constraints with other competing service constraints when optimizing operation requirements of a platform.

US 2014/283107 A1 discloses a method, which includes identifying an attempt to access, by an application instance running in a user space of an operating system, a first security zone of a computer readable medium, where the first security zone is associated with a first security level. The method further includes determining whether a restriction level associated with the application instance is higher than the first security level, where the restriction level is a function of previous security zones that have been accessed by the application instance. When the restriction level associated with the application instance is higher than the first security level, the method would prevent the application instance from writing to the first security zone. When the restriction level associated with the application instance is not higher than the first security level, the method would authorize the application instance to access the first security zone.

US2014/373104 A1 discloses a data sensitivity model which can define the sensitivity of different types of data. When an application requests access to a particular data item, the sensitivity of that data item can be determined. If the data item has a low sensitivity, access to the data item can be granted. If the data item has a high sensitivity, the system can request authentication before granting access to the data item.

US8938775 B1 discloses applying limitations on the usage of data, which can be controlled by one or more policies associated with tags, security levels, and/or compartments. A control service can monitor traffic to enforce the appropriate rules or policies, and in some cases can prevent encrypted traffic from passing beyond a specified egress point unless the encryption was performed by a trusted resource with the appropriate permissions.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.
FIG. 1 illustrates a schematic view of a computing environment 100 that facilitates a subject establishing a secure session between a subject and a secure data container via a secure data corridor.
FIG. 2A illustrates a block diagram of an informational graph that describes the relationship between data objects, data elements, and data feeds within a use-case and/or secure data container. FIG. 2B illustrates a block diagram of a diagraph that represents subject permissions to a specific control and a specific data feed.
FIG. 3A illustrates a block diagram of an exemplary permission lattice associated with granting access privileges to a subject. FIG. 3B illustrates a data sensitivity lattice for classifying control to for the control level of data feeds.
FIG. 4 illustrates a block diagram of a resource management platform that can establish a communicative connection between a subject device and a secure data container via a secure data corridor.
FIG. 5 illustrates a flow diagram that describes a process of establishing a session between a subject and a secure data container using a secure data corridor.
FIG. 6 illustrates a flow diagram that describes a process of dynamically setting a data sensitivity rating of a secure data corridor based at least in part on the data sensitivity of data feeds.

### DETAILED DESCRIPTION

The invention is defined by the appended independent claims. Further embodiments are defined by the appended dependent claims.

This disclosure describes techniques for defining security measures of a "secure data corridor" that enables data feeds to transmit from an ingress point to an egress point, while maintaining a desired security protection. The term "secure data corridor" as used herein may describe a communication channels used to transmit data feeds from a source location (i.e., ingress point) to a destination location (i.e., egress point). The techniques described herein further associate a secure data corridor with security measures that mandate confidentiality protection and data integrity protection that is commensurate with the nature of the data feed. For example, a data feed that relates to proprietary vendor data that is preferentially withheld from public dissemination may be associated with a less sensitive security measure when compared with a data feed that that relates to personal consumer information that must be withheld from public dissemination. In various examples, security measures may be defined, and enforced by explicit, read, write, import and export provisions expressly associated with data feeds. Further, any other regime that is definable by a developer or an administrator, may be used to define security measures.

In various examples, data items may be classified by use-case, and risk controls may be applied based on the sensitivity of data that is maintained within each use case. Each use case may be classified and assigned to "data sensitivity rating." The term "data sensitivity rating" is used herein to describe a rating, or score, given to a data feed that quantifies the security measure that mandates confidentiality protection and data integrity protection. Using the above mentioned example, a data feed that is associated with personal consumer information to be withheld from public dissemination is likely to be assigned a more sensitive, that is higher, data sensitivity rating, relative to a data feed that relates to proprietary vendor data that is preferentially withheld from public dissemination.

Each data sensitivity rating may prompt one or more control parameters that protect the confidentiality and integrity of the data feed. The one or more control parameters may include principles such as no read-up, no write-down, tranquility, explicit read-in, and explicit write-out. The 'no read-up' principle refers to a condition whereby a subject at a given security level may not read a data feed at a high security level. A 'no write-down' principle refers to a condition whereby a subject at a given security level may not write to a data feed to a less sensitive security level. The term "subject" as used herein describes a user, a non-user entity, a secure data container, or any other data structure requesting access permissions to data feeds within a secure data container, and via a secure data corridor.

In various examples, the classification of a "data sensitivity rating" may be associated directly with data elements, and set by predetermined rules. In some examples, a default data sensitivity rating may be assigned to a secure data corridor. In other examples, the data sensitivity rating may be based on access privileges associated with the subject. Further, the data sensitivity rating of the secure data corridor may be dynamically set by interrogating the nature of the data feed that is transmitting through the secure data corridor. In some examples, the data sensitivity rating may be set in substantially real-time.

The term "data feed" as used herein describes a mechanism by which data can be transferred from a source location. A data feed may include one or more data elements, which in turn are associated with data objects. A data feed may be assigned a default control parameter that applies to all data elements in the feed. A data feed may have default controls and acquired controls. Acquired controls may supersede default controls. The ability to set default controls on a data feed may facilitate loading data into the cluster that requires transformation after loading, but still requires protection.

The term "data element" as used herein describes the physical and logical characteristics of an associated data type. Further, a data element may define a data type as a string, integer, float, or object. The data elements map to data objects, which in turn store the data value at a particular storage location.

In some examples, the control parameters are assigned to the data objects. The data elements that map to the data objects inherit control parameters from the data objects. Further, the data feed that maps to the data elements inherit the control parameters from the data elements, and ultimately from the data objects. The level of control parameters is dependent on the use case. Thus, the security model may be customized for different use cases. In other words, a use case may be associated with a specific data sensitivity rating, and all data objects associated with the use case may be assigned that same, specific data sensitivity rating. Thus, a subject with access to a use case may have access to all data and services that are assigned to the use case provided that the subject retains the requisite access permissions.

Each use case, may have its own namespace, which can be enforced by a resource management platform. Privileges and permission are attached to the namespace. The term 'namespace' is used herein to describe a set of symbols that are used to organize objects of various kinds, so that these objects may be referred to by name. In a non-limiting example, a namespace may include file systems, programming languages, and computer networks and distributed systems. Further, a namespace may also include a secure data container.

In various examples, a subject may be added to an Access Control List (ACL) on the authentication service principals in order to gain access to a secure data corridor. Generally, a subject assigned to a given data sensitivity rating may access all data within that same classification.

This disclosure further describes techniques that illustrate multiple layers of authentication, authorization, and auditing of separate platform levels. Thus, a single point of attack (SPOA) in the security trust chain can be avoided as any successful attack would need to be of a synchronized multi-point nature. Elements of a defense in depth may include controlling access to the resource management platform by an authentication server entry. Authentication may be performed by an Active Directory whereby a subject may provide a set of credentials that confirm their identity. In a non-limiting example, the credentials may include a username, password, or other biometric identifier. Further, authorization to access a secure data container, via secure data corridor is dependent on the assigned access privileges and the data sensitivity rating of an associated use case and data feed within the secure data container.

A secure data corridor may comprise of a secure data container and trust chain vertices. A trust chain is created by a directed graph of vertices between SDC. The traversal of a given trust chain not only verifies the integrity of the chain, but also enables an audit mechanism. The secure data container is, in essence, embedded within the data corridor. The trust chain vertices define logical input and output pathways to the embedded data container. In other words, a secure data corridor connotes a transport mechanism and in its basic pathway operates as a migration pathway of physical data.

In various examples, the secure data corridor may correspond to a link layer, a network layer, a transport layer, or an application layer of a transmission control protocol (TCP) and internet protocol (IP). In a non-limiting example, a secure data corridor may include one input, one output, and one container. In a second non-limiting example, a secure data corridor may include one container with one input and no outputs. In this example, the SDC can acts as a secure sink where data of an unknown sensitivity rating can be staged prior to being class-rated into other containers, and other secure data corridors. In a third non-limiting example, the secure data corridor may include a secure data container with multiple outputs and no input. In this example, the secure data corridor input may be disconnected once data has been migrated. The multiple outputs, that is vertices, may connect to several other secure data corridors.

The term "data container," as used herein, describes a data structure that includes data items associated with the operation of a particular application. For example, a data container of a particular application and its dependencies may include an operating system, one or more data item libraries, configuration files, application binaries, and other parts of a technology stack used for execution of the particular application. Unlike a traditional virtual machine, a data container may hold its application and any dependencies, however a same operating system kernel and libraries can be shared between multiple containers running in a host environment.

The principles described herein may be applicable to any distributed computing environment. Historical protection techniques include network (IP address), firewall (Ports, Services), platform (Folder, Share) and data (Schema, Table) segmentation.

The term "techniques," as used herein, may refer to system(s), method(s), computer-readable instructions, module(s), algorithms, hardware logic, and/or operation(s) as permitted by the context described above and throughout the document.

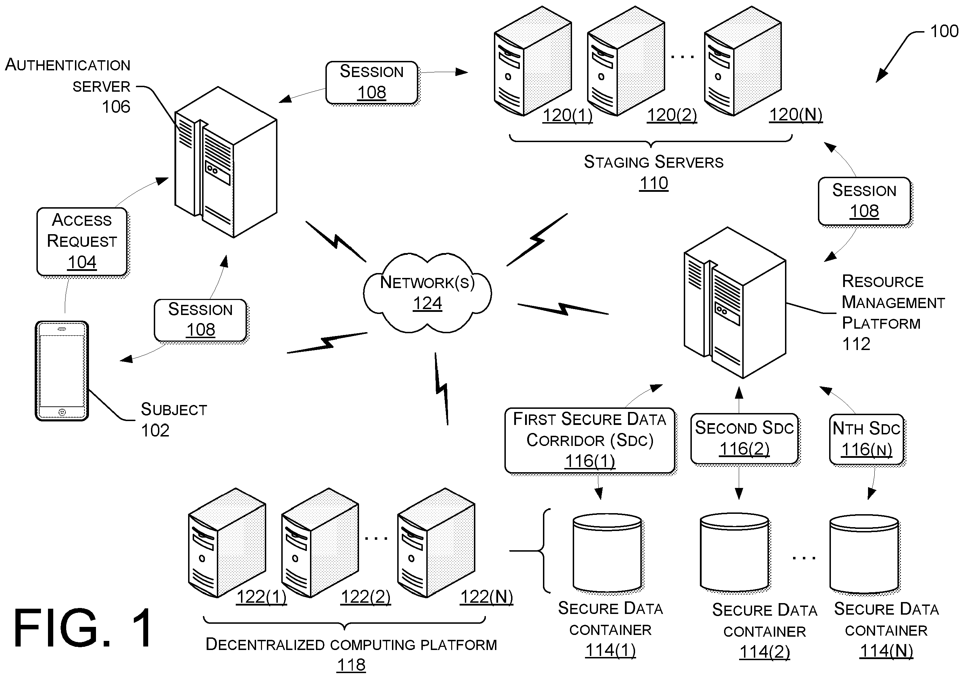

FIG. 1 illustrates a schematic view of a computing environment 100 that facilitates a subject establishing a secure session between a subject and a secure data container via a secure data corridor.

In the illustrated example, the subject 102 may transmit an access request 104 to an authentication server 106. In some examples, the authentication server 106 may perform authentication by an Active Directory whereby the subject 102 may provide a set of credentials that confirm their identity. In a non-limiting example, the credentials may include a username, password, or other biometric identifier associated with the subject.

In various examples, the subject 102 may correspond to a user, a non-user entity, a secure data corridor, or any other data structure that is capable of requesting access permissions to data feeds within a secure data container.

The subject 102 may interface with the authentication server 106 via any sort of electronic device, such as a cellular phone, a smart phone, a tablet computer, an electronic reader, a media player, a gaming device, a personal computer (PC), a laptop computer, etc. Further, the electronic device of the subject 102 may include a subscriber identity module (SIM), such as an eSIM, to identify the electronic device of the subject 102 to a telecommunication service provider network (also referred to herein as "telecommunication network").

In the illustrated example, in response to authenticating the subject 102, a session 108 is initiated via the authentication server 106 between the subject 102, through one or more staging server(s) 110. The goal of a decentralized cluster security policy must be to balance the need to provide scalable aggregation while still maintaining isolation based on security classifications. Isolation may be based on authorization and via the one or more staging server(s) 110.

Further, the one or more staging server(s) 110 are communicatively connected to a resource management platform 112. The resource management platform 112 may establish a communicative connection between a subject 102 and one or more secure data container(s) 114(1), 114(2), or 114(N), via a secure data corridor 116(1), 116(2), and 116(N) respectively. In various examples, the secure data corridor 116(1), 116(2), and 116(N) correspond to a link layer, a network layer, a transport layer, or an application layer of a transmission control protocol (TCP) and internet protocol (IP). In a non-limiting example, a secure data corridor may include one input, one output, and one container. In a second non-limiting example, a secure data corridor may include one container with one input and no outputs. The one or more secure data containers 114(1), 114(2), or 114(N) may be stored within a decentralized computing platform 118. The one or more secure data containers 116(1), 116(2), or 116(N) may include a data structure that includes data items associated with the operation of a particular application. For example, a data container of a particular application and its dependencies may include an operating system, one or more data item libraries, configuration files, application binaries, and other parts of a technology stack used for execution of the particular application.

The one or more staging server(s) 110 and the decentralized computing platform 118 may operate on one or more distributed computing resource(s), respectively. The one or more distributed computing resource(s) may include one or more computing device(s) 120 and 122, respectively, that operate in a cluster or other configuration to share resources, balance load, increase performance, provide fail-over support or redundancy, or for other purposes. The one or more computing device(s) 120 and 122 may include one or more interfaces that enable communications with electronic device(s), such as an electronic device associated with the subject 102, via one or more network(s) 124.

In the illustrated example, the one or more network(s) 142 may include public networks such as the Internet, private networks such as an institutional and/or personal intranet, or some combination of private and public networks. The one or more network(s) 124 can also include any type of wired and/or wireless network, including but not limited to local area network (LANs), wide area networks (WANs), satellite networks, cable networks, Wi-Fi networks, Wi-Max networks, mobile communications networks (e.g., 3G, 4G, and so forth), or any combination thereof.

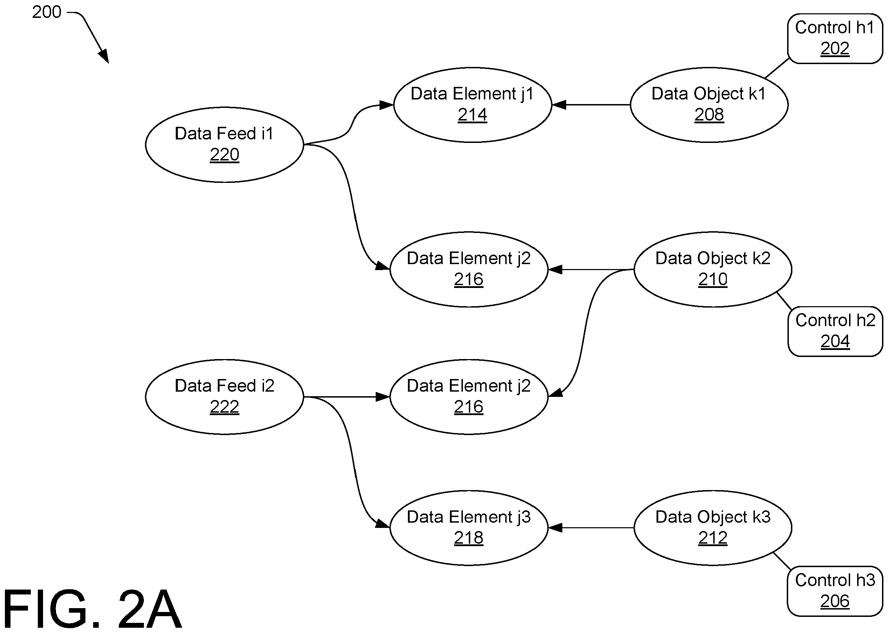

FIG. 2A illustrates a block diagram of an informational graph 200 that describes the relationship between data objects, data elements, and data feeds within a use-case and/or secure data container. In the illustrated example, control parameters 202, 204, and 206 may be assigned to data objects 208, 210, and 212 respectively. The control parameters may include principles such as no read-up, no write-down, tranquility, explicit read-in, and explicit write-out. The 'no read-up' principle refers to a condition whereby a subject at a given security level may not read a data feed at a high security level. A 'no write-down' principle refers to a condition whereby a subject at a given security level may not write to a data feed to a less sensitive security level.

In the illustrated example, the data elements 214, 216, and 218 may map to the data objects 208, 210, and 212 and inherit the respective control parameters 202, 204, and 206 of the data objects 208, 210, and 212. A data element may define the physical and logical characteristics of an associated data type. For example, a data element may define a data type as a string, integer, float, or object. Further, a data element may further define a risk rating or a generic sensitivity rating of the associated data. In some examples, sensitivity may change over time. Sensitivity may also change to reflect a directed or explicit sensitivity policy. Further, a data element may define a data type as a string, integer, float, or object. The data elements map to data objects, which in turn store the data value at a particular storage location.

In the illustrated example, the data feeds 220 and 222 that maps to the data elements inherit the control parameters from the data elements 214, 216, and 218, and ultimately from the data objects 208, 210, and 212.

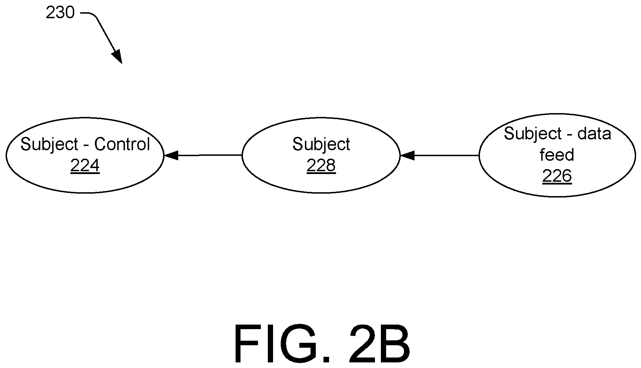

FIG. 2B illustrates a block diagram of a diagraph that represents subject permissions to specific control parameters 224 and a specific data feed 226. In the illustrated example, permissions associated with the subject 228 are bound to specific control parameters 224 and stored in a list of triples 230 (i.e., subject, control, and data feed) that tie the subject 228 to specific controls, and correspondingly the subject to the data feeds that are tagged by the specific controls. In some examples, the subject 228 may be granted access permissions to data feeds, whereby the nature of access is governed by the specific control parameters specified in the list of triples 230. The data feeds 226 and specific control parameters 224 may be explicitly assigned. Alternatively, or additionally, the subject 228 may be granted access to all data elements that are qualified by a specific control parameter.

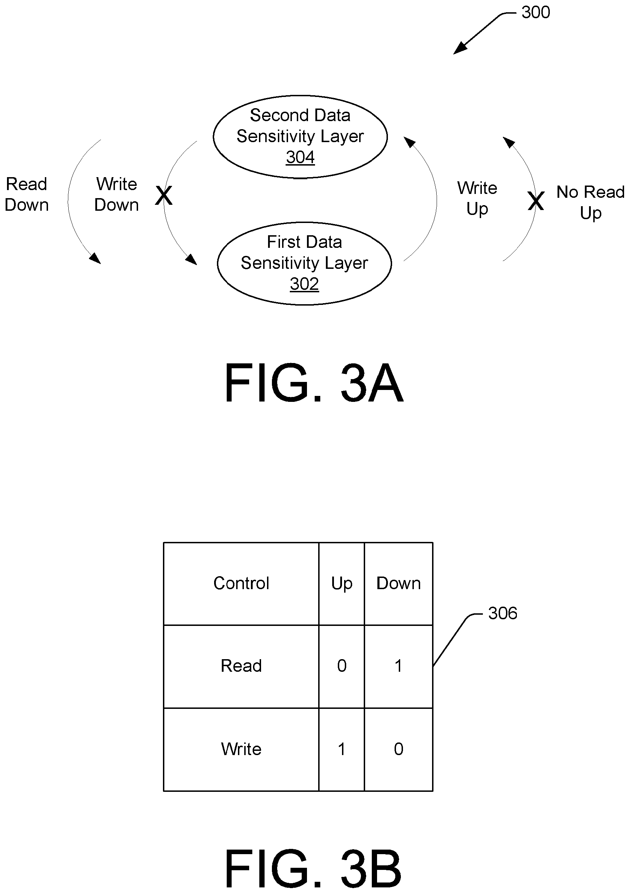

Further, the resource management platform may interrogate the list of triples 230 associated with the subject to determine privileged data feeds as well as the controls that determine the access rights to those data feeds. The control parameters 224 may be expressed as a data sensitivity lattice of varying levels as further described in FIG. 3.

FIG. 3A illustrates a block diagram of an exemplary, data sensitivity lattice 300 associated with granting access permissions to a subject. In various examples, a subject may correspond to a user, a non-user entity, a secure data container, or any other data structure requesting access privileges. Particularly, FIG. 3A illustrates a block diagram of a data sensitivity lattice 300. In some examples, the data sensitivity lattice 300 may include a first data sensitivity layer 302 and a second data sensitivity layer 304. In the illustrated example, the first data sensitivity layer 302 may be associated with a first set of data items that mandate the least security measures for data confidentiality and data integrity protection. In a non-limiting example, the first set of data items may correspond to proprietary vendor data that is preferentially withheld from public distribution. Comparatively, the second data sensitivity layer 304 may be associated with a second set of data items that mandate more data security measures relative to the first data sensitivity layer 302, for data confidentiality and data integrity protection. In a non-limiting example, the second set of data items may correspond to personal consumer information that must be withheld from public distribution. For illustrative purposes only, FIGS. 3A and 3B present a two-layer, data sensitivity lattice 300. It is noteworthy that the data sensitivity lattice 300 may be defined to include any number of layers favored by a developer or administrator.

Further, FIG. 3A illustrates the relative flow of read and write permissions between the first data sensitivity layer 302 and the second data sensitivity layer 304. It is noteworthy, that although FIG. 3A describes read and write permissions, permissions may further include import permissions, export permissions, or any other permission regime definable by a developer or administrator. In the illustrated example, a subject with access permission to the first data sensitivity layer 302 may write data items to the second data sensitivity layer 304, however the subject may not read data items within the second data sensitivity layer 304. In other words, the subject may add (i.e., write) data items to the more sensitive, second data sensitivity layer 304, however the subject may not access, that is read, data items within the more sensitive, second data sensitivity layer 304.

FIG. 3A further illustrates that a subject with access permission to the second data sensitivity layer 304 may read data items within the first data sensitivity layer 302, however the subject may not write data items within the first data sensitivity layer 302. In other words, the subject may read data items within the less sensitive, first data sensitivity layer 302, however the subject may not add (i.e., write) data items to the less sensitive, first data sensitivity layer 302.

It is noteworthy that a subject with access permission to the first data sensitivity layer 302 may read data items and write data items within the first data sensitivity layer 302. Similarly, a subject with access permission to the second data sensitivity layer 304 may read data items and write data items within the second data sensitivity layer 304. Note that the terms data sensitivity layer and data sensitivity rating may be used interchangeably to describe the data sensitivity of a data item. Further the term data item may be used interchangeably to describe data feed.

FIG. 3B illustrates a data sensitivity lattice 306 that associates control parameters with data feeds. The control parameters are tied to data feeds. The control parameters may include read, write, export, and import parameters. In a non-limiting example, consider a subject with access permission to the second data sensitivity layer 304. As illustrated in FIG. 3A, the subject may read data items within the first data sensitivity layer 302, but may not add (i.e., write) data items to the first data sensitivity layer 302. The write limitation ensures that the subject may avoid inadvertently having more sensitive data items from the second data sensitivity layer 304 being added to the less sensitive, first data sensitivity layer 302. The data sensitivity lattice 306 of FIG. 3B reflects the same, except access permissions are presented from the perspective of the data feed, rather than the subject.

For example, FIG. 3A illustrates the second data sensitivity layer 304 as the most data sensitivity layer. Thus, the second data sensitivity layer 304 can only interact downward with the first data sensitivity layer 302. In FIG. 3B, the interaction of the second data sensitivity layer 304 with the first data sensitivity layer 302 is reflected in the 'down' column of the data sensitivity lattice 306. The 'down' column indicates a capability to read down (i.e., '1' in the read - down cell), and an inability to write down (i.e., '0' in the write - down cell).

Similarly, as shown FIG. 3A, a subject with access permissions to first data sensitivity layer 302 may not read data contained within the second data sensitivity layer 304, because the more sensitivity of the second data sensitivity layer 304 represents more sensitively classified data. Using the previous example of proprietary vendor data and consumer personal data, a subject with permission access to proprietary vendor data (i.e., classified as first data sensitivity layer 302) cannot read the consumer personal data (i.e., classified as the second data sensitivity layer 304).

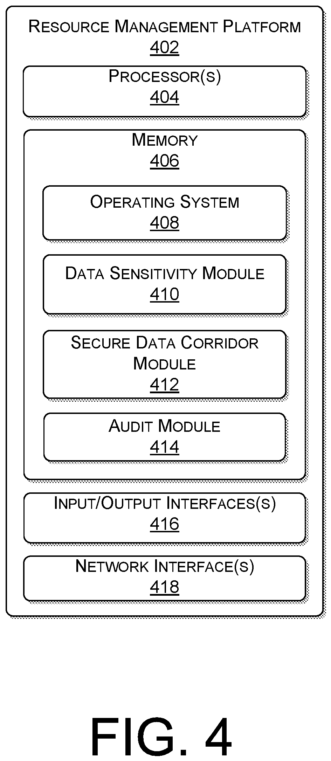

FIG. 4 illustrates a block diagram of a resource management platform 402 that can establish a communicative connection between a subject and a secure data container via a secure data corridor. The secure data corridor may be configured with a data sensitivity rating that is substantially similar to a data sensitivity rating of an adjoining secure data container. In some examples, the subject may correspond to a user device, a non-user entity device, or another adjoining secure data container.

In the illustrated example, the resource management platform 402 may correspond to resource management platform 112. Further, the resource management platform 402 may include one or more processor(s) 404 that are operably connected to memory 406. In at least one example, the one or more processor(s) 404 may be a central processing unit(s) (CPU), graphics processing unit(s) (GPU), a both a CPU and GPU, or any other sort of processing unit(s). Each of the one or more processor(s) 404 may have numerous arithmetic logic units (ALUs) that perform arithmetic and logical operations as well as one or more control units (CUs) that extract instructions and stored content from processor cache memory, and then executes these instructions by calling on the ALUs, as necessary during program execution. The one or more processor(s) 404 may also be responsible for executing all computer applications stored in the memory, which can be associated with common types of volatile (RAM) and/or nonvolatile (ROM) memory.

In some examples, memory 406 may include system memory, which may be volatile (such as RAM), non-volatile (such as ROM, flash memory, etc.) or some combination of the two. The memory may also include additional data storage devices (removable ad/or non-removable) such as, for example, magnetic disks, optical disks, or tape.

The memory 406 may further include non-transitory computer-readable media, such as volatile and nonvolatile, removable and non-removable media implemented in any method or technology for storage of information, such as computer readable instructions, data structures, program modules, or other data. System memory, removable storage and non-removable storage are all examples of non-transitory computer-readable media. Examples of non-transitory computer-readable media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other non-transitory medium which can be used to store the desired information.

In the illustrated example, the memory 406 may include an operating system 408, a data sensitivity module 410, a secure data corridor module 412, and an audit module 414. The operating system 408 may be used to implement the data sensitivity module 410 and the secure data corridor module 412. The operating system 408 may be any operating system capable of managing computer hardware and software resources. The data sensitivity module 410, the secure data corridor module 412, and audit module 414 may include routines, program instructions, objects, and/or data structures that perform particular tasks or implement particular abstract data types.

In the illustrated example, the data sensitivity module 410 may determine the data sensitivity rating to assign to a secure data corridor. In some example, the data sensitivity module 410 may detect a data sensitivity rating at an ingress and egress point of a secure data corridor. The ingress and egress points may interchangeably correspond to a subject and a secure data container, depending on the flow of data feeds. Thus, the data sensitivity module 410 may further assign a data sensitivity rating to the secure data corridor that corresponds with the determined data sensitivity rating at the ingress and egress points.

In a non-limiting example, the data sensitivity module 410 may quantify a data sensitivity rating of secure data corridor based on access permissions associated with a subject. For example, the data sensitivity module 410 may detect that access permissions associated with the subject may limit the data sensitivity rating of data feeds that the subject may access. For example, if a subject is permitted to access data feeds with a first data sensitivity rating, whereby the first data sensitivity rating is less sensitive (i.e., mandates less data security measures for data confidentiality and data integrity protection) than a second data sensitivity rating, the data sensitivity module 410 may associate the first data sensitivity rating to a secure data corridor that establishes a session link between a secure data container and the subject. Doing so ensures that data feeds that egress from the secure container to the subject comply with access permissions of the subject and do not include data feeds that may be more sensitive (i.e., mandate more data security measures for data confidentiality and data integrity protection) than permitted by the subject access permissions.

In another non-limiting example, the data sensitivity module 410 may quantify a data sensitivity rating of the secure data corridor based on the data sensitivity rating of incoming data feeds that ingress from the subject to a secure data container. In other words, the data sensitivity rating of the secure data corridor may be based on the data sensitivity rating of incoming data feeds that are transmitting into the secure data container, rather than data feeds being accessed by the subject from the secure data container. In this example, the data sensitivity module 410 may quantify a data sensitivity rating for incoming data feeds and associate that data sensitivity rating to the secure data corridor that establishes a session link between the subject and the secure data container. Doing so ensures that incoming data feeds transmitting from the subject to the secure data container are protected while transmitting through the secure data corridor.

Further, in another non-limiting example, the data sensitivity module 410 may quantify a data sensitivity rating of the secure data corridor based on the data sensitivity rating of data feeds that transmit through the secure data corridor. In other words, the data sensitivity module 410 may detect the data sensitivity rating of data feeds transmitting through the secure data corridor, and dynamically set a substantially similar data sensitivity rating for the secure data corridor. A benefit of this approach is that in some instances, data feeds may have an unknown data sensitivity rating. As a precautionary measure, these data feeds tend to be assigned a high data sensitivity rating until determined otherwise. Thus to avoid assigning a secure data corridor with an arbitrary, and unnecessarily high data sensitivity rating that is based on data feed with unknown data sensitivity ratings transmitting through the secure data corridors, the data sensitivity module 410 may progressively adjust the data sensitivity rating of the secure data corridor in response to progressively quantifying the unknown data sensitivity ratings of the data feeds.

Additionally, the data sensitivity module 410 may lock the data sensitivity rating of a secure data corridor based at least in part on the data sensitivity rating of the adjoining secure data container. For example, a secure data container may have assigned a particular data sensitivity rating based at least in part on an associated use case. Thus, by locking the data sensitivity rating of the secure data corridor, the data sensitivity module 410 may ensure that data feeds that transmit through the secure data corridor comply with the data sensitivity rating of the use case.

In the illustrated example, the secure data corridor module 412 may establish a secure data corridor between a subject device and a secure data container. In various examples, the secure data corridor may correspond to a link layer, a network layer, a transport layer, or an application layer of a transmission control protocol (TCP) and internet protocol (IP). Further, secure data corridor module 412 may assign the secure data corridor with a data sensitivity rating that is determined by the data sensitivity module 410.

In the illustrated example, the audit module 414 facilitate a developer or administrator to audit an operation of the resource management platform. The audit module 414 may identify access permissions associated with a subject and compare the access permissions with control parameters of the data feeds. Further, the audit module 414 may interrogate data sensitivity ratings associated with established secure data corridors, secure data containers, and use cases associated with secure data containers. Additionally, the audit module may ensure that each of the secure data corridors and secure data containers comply with the control parameters of the transmitting data feeds.

In the illustrated example, the resource management platform 402 may further include input/output interface(s) 416. The input/output interface(s) 416 may include any type of output interface known in the art, such as a display (e.g., a liquid crystal display), speakers, a vibrating mechanism, or a tactile feedback mechanism. Input/output interface(s) 416 also include ports for one or more peripheral devices, such as headphones, peripheral speakers, or a peripheral display. Further, the input/output interface(s) 416 may further include a camera, a microphone, a keyboard/keypad, or a touch-sensitive display. A keyboard/keypad may be a push button numerical dialing pad (such as on a typical telecommunication device), a multi-key keyboard (such as a conventional QWERTY keyboard), or one or more other types of keys or buttons, and may also include a joystick-like controller and/or designated navigation buttons, or the like.

In the illustrated example, the resource management platform 402 may further include one or more network interface(s) 418. The one or more network interface(s) 418 may include any sort of transceiver known in the art. For example, the one or more network interface(s) 418 may include a radio transceiver that performs the function of transmitting and receiving radio frequency communications via an antenna. In addition, the one or more network interface(s) 418 may also include a wireless communication transceiver and a near field antenna for communicating over unlicensed wireless Internet Protocol (IP) networks, such as local wireless data networks and personal area networks (e.g., Bluetooth or near field communication (NFC) networks). Further, the one or more network interface(s) 418 may include wired communication components, such as an Ethernet port or a Universal Serial Bus (USB).

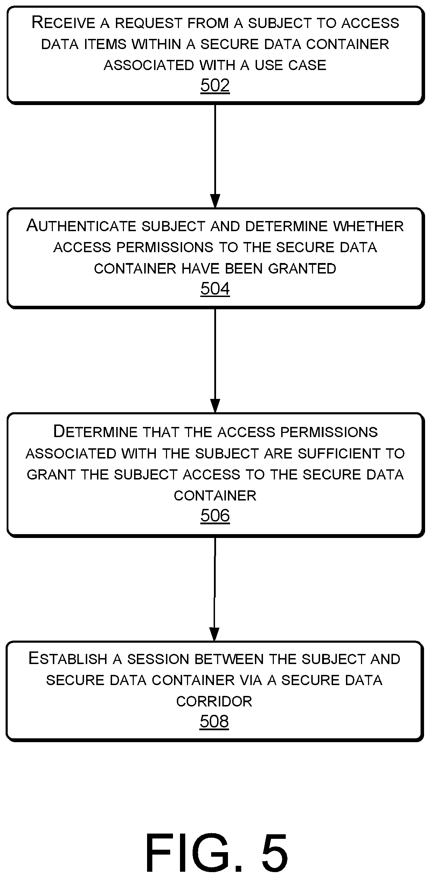

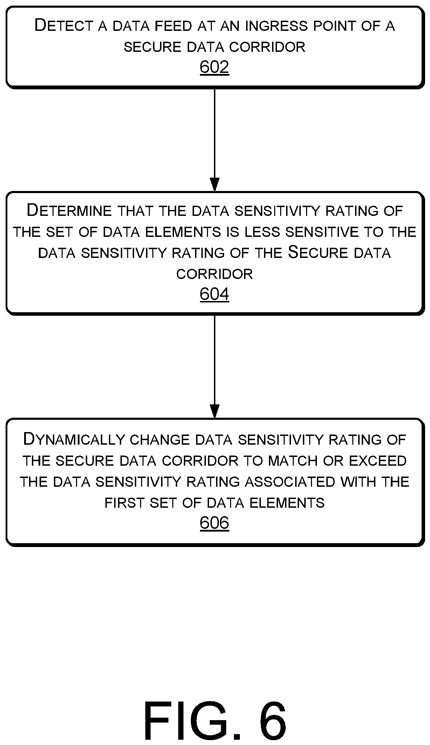

FIGS. 5 and 6 present illustrative processes 500 and 600 for establishing a session between a subject and a secure data container using a secure data corridor, and dynamically setting a data sensitivity rating of a secure data corridor based at least in part on the data sensitivity ratings of data feeds. Each of processes 500 and 600 illustrate a collection of blocks in a logical flow chart, which represents a sequence of operations that can be implemented in hardware, software, or a combination thereof. In the context of software, the blocks represent computer-executable instructions that, when executed by one or more processors, perform the recited operations. Generally, computer-executable instructions may include routines, programs, objects, components, data structures, and the like that perform particular functions or implement particular abstract data types. The order in which the operations are described is not intended to be construed as a limitation, and any number of the described blocks can be combined in any order and/or in parallel to implement the process. For discussion purposes, the processes 500 and 600 are described with reference to the environment 100 of FIG. 1.

FIG. 5 illustrates a flow diagram that describes a process of establishing a session between a subject and a particular secure data container using a secure data corridor. In various examples, the subject may correspond to a user, a non-user entity, or another secure data corridor that requests permission to access data feeds within the particular secure data corridor. At 502, a resource management platform may receive a request from a subject to access data items within a secure data container. In some examples, the secure data container may be associated with a use case, whereby all data feeds within the secure data container retain a particular data sensitivity rating.

At 504, the resource management platform may authenticate an identity of the subject and determine whether access permissions to the secure data container have been granted. In some examples, access permissions may be associated with control parameters associated with data feeds. Further, permissions may be bound to specific control parameters stored in a list of triples that tie the subject to control parameters of data feeds. In other examples, access permissions may be tied to a use-case of the secure data container, such that the subject is permitted access to all data feeds associated with the use-case and/or the secure data container.

At 506, the resource management platform may determine that access permissions associated with the subject are sufficient to allow the subject access to the secure data container. The determination may be based at least in part on a comparison of the access permissions to the control parameters associate with data feeds within the secure data containers.

At 508, the resource management platform may establish a session link between the subject and the secure data container via secure data corridor. In various examples, the secure data corridor may be assigned a data sensitivity rating that is based on a data sensitivity rating of data feeds within the secure data container. Alternatively, the data sensitivity rating may be locked by an administrator based at least in part on use-case for the secure data container.

FIG. 6 illustrates a flow diagram that describes a process of auto-leveling the data sensitivity rating of a secure data corridor based at least in part on the data sensitivity of transmitting data feeds. In other words, the resource management platform may detect the data sensitivity rating of data feeds that transmitting through the secure data corridor, and dynamically set a substantially similar data sensitivity rating for the secure data corridor.

At 602, the resource management platform may detect a data feed at an ingress point of a secure data corridor. In a non-limiting example, the ingress point may correspond to an endpoint at the subject, whereby the incoming data feed may be intended to transmit from the subject, via the secure data corridor, and to an adjoining secure data container. In another non-limiting example, the ingress point may correspond to the secure data container, whereby the incoming data feed may be intended to transmit from the secure data container, via the secure data corridor, and to the subject.

At 604, the resource management platform may determine that a data sensitivity rating of the data feed is more sensitive than the data sensitivity rating of the secure data corridor. In other words, the data feed may mandate more data security measures to maintain sufficient data confidentiality and data integrity than what is provided by the data sensitivity rating of the secure data corridor.

At 606, the resource management platform may dynamically set a data sensitivity rating for the secure data corridor that is substantially similar to that of the data feed. In doing so, the confidentiality and the integrity of the data feed may not be compromised while transmitting through the secure data corridor.

## Claims

1. A system of a resource management platform, comprising:
one or more processors (404);
memory (406) coupled to the one or more processors, the memory including one or more modules (410, 412, 414) that are executable by the one or more processors to:
receive a message that includes a request from a subject (102) to access a set of data items associated with a first secure data container (114) wherein the subject is a user, a non-user entity, a second secure data container, or any other data structure that is capable of requesting access permissions to data feeds within a secure data container, and wherein a secure data container is a secure data structure that includes data items associated with the operation of an application;
identify a set of permissions associated with the subject based at least in part on the message, the message including a set of access permissions that authorize the subject to access the set of data items having a first data sensitivity rating;
determine that the subject is authorized to access the first secure data container based on a comparison of the set of access permissions and a second data sensitivity rating associated with the first secure data container;
establish a secure data corridor between the subject and the first secure data container, wherein the secure data corridor (116) is a communication channel used to transmit data feeds between the subject and the first secure data container, the secure data corridor having a third data sensitivity rating that is based at least in part on the first data sensitivity rating and the second data sensitivity rating;
detect a data feed at an ingress point of the secure data corridor, the ingress point corresponding to an endpoint at the subject, whereby the incoming data feed is intended to transmit from the subject, via the secure data corridor, and to the adjoining first secure data container;
determine that a data sensitivity rating of the data feed is more sensitive than the third data sensitivity rating of the secure data corridor; and
in response to a determination that the data sensitivity rating of the data feed is more sensitive than the third data sensitivity rating of the secure data corridor, dynamically set the third data sensitivity rating of the secure data corridor to be equal to that of the data feed.

2. A system according to claim 1, wherein the set of data items is a first set of data items and the message is a first message, wherein the first message further includes a request for ingress of a second set of data items into the first secure data container, and wherein the one or more modules are further executable by the one or more processors to:
determine an additional data sensitivity rating associated with the second set of data items;
determine that the additional data sensitivity rating is more sensitive in comparison to the second data sensitivity rating of the first secure data container, the second data sensitivity rating being a maximum threshold of sensitivity for ingress of the second set of data items into the first secure data container;
determine that the third data sensitivity rating of the secure data corridor is locked; and
transmit a second message to the subject indicating that the second set of data items cannot securely transmit through the secure data corridor.

3. A system according to claim 1 or 2, wherein the third data sensitivity rating associated with the secure data corridor is dynamically set to be at least equal to the first data sensitivity rating associated with the first secure data container.

4. A system according to any of the preceding claims, wherein the third data sensitivity rating associated with the secure data corridor is based at least in part on individual control parameters associated with individual data feeds at an ingress point or an egress point of the secure data corridor, the individual control parameters including at least one of an explicit read provision, an explicit write provision, an explicit import provision, or explicit export provision.

5. A system according to claim 4, wherein the individual control parameters are initially assigned to one or more data objects, wherein individual data objects of the one or more data objects are linked to one or more data elements, and the one or more data elements being further linked to the individual data feeds via a diagraph of connectivity.

6. A system according to any of the preceding claims, wherein the set of data items is a first set of data items, and wherein the one or more modules are further executable by the one or more processors to:
determine that the first data sensitivity rating associated with the subject is less sensitive in comparison to the second data sensitivity rating associated with the first secure data container;
determine that the subject is unauthorized to read data items within the first secure data container, based at least in part on the first data sensitivity rating and the second data sensitivity rating; and
configure the secure data corridor to prevent the secure data corridor from transmitting the first set of data items from the first secure data container to the subject.

7. A system according to any of the preceding claims, wherein the set of data items is a first set of data items and the message is a first message, wherein the first message further includes a request for ingress of a second set of data items to the first secure data container, and wherein the one or more modules are further executable by the one or more processors to:
determine that the first data sensitivity rating associated with the subject is less sensitive in comparison to the second data sensitivity rating associated with the first secure data container;
determine that the subject is authorized to write data items to the first secure data container, based at least in part on comparing the first data sensitivity rating and the second data sensitivity rating; and
configure the secure data corridor to transmit the second set of data items from the subject to the secure data corridor.

8. A computer-implemented method, comprising:
under control of one or more processors (404):
receiving a message that includes a request from a subject (102) to access a set of data items associated with a first secure data container (114) wherein the subject is a user, a non-user entity, a second secure data container, or any other data structure that is capable of requesting access permissions to data feeds within a secure data container, and wherein a secure data container is a secure data structure that includes data items associated with the operation of an application;
identifying a set of permissions associated with the subject based at least in part on the message, the message including a set of access permissions that authorize the subject to access the set of data items having a first data sensitivity rating;
determining that the subject is authorized to access the first secure data container based on a comparison of the set of access permissions and a second data sensitivity rating associated with the first secure data container;
establishing a secure data corridor between the subject and the first secure data container, wherein the secure data corridor (116) is a communication channel used to transmit data feeds between the subject and the first secure data container, the secure data corridor having a third data sensitivity rating that is based at least in part on the first data sensitivity rating and the second data sensitivity rating;
detecting a data feed at an ingress point of the secure data corridor, the ingress point corresponding to an endpoint at the subject, whereby the incoming data feed is intended to transmit from the subject, via the secure data corridor, and to the adjoining first secure data container;
determining that a data sensitivity rating of the data feed is more sensitive than the third data sensitivity rating of the secure data corridor; and
in response to a determination that the data sensitivity rating of the data feed is more sensitive than the third data sensitivity rating of the secure data corridor, dynamically setting the third data sensitivity rating of the secure data corridor to be equal to that of the data feed.

9. A method according to claim 8, further comprising:
determining, via a scheduling algorithm, the third data sensitivity rating based at least in part on the first data sensitivity rating associated with the set of data items;
identifying control parameters associated with individual data items of the set of data items;
determining individual data sensitivity ratings for the individual data items, based at least in part on the control parameters;
determining that the individual data sensitivity ratings of a portion of the individual data items are at least equal to the third data sensitivity rating of the secure data corridor, based at least in part on the control parameters associated with the portion of the individual data items; and
causing, the portion of the individual data items to transmit through the secure data corridor based at least in part on the individual data sensitivity ratings.

10. A method according to claim 9, wherein the portion of the individual data items is a first portion of the individual data items, and further comprising:
determining that the individual data sensitivity ratings of a second portion of the individual data items are greater than the second data sensitivity rating of the secure data corridor; and
dynamically setting the third data sensitivity rating of the secure data corridor to be at least equal to the individual data sensitivity ratings of the second portion of the individual data items.

11. A method according to claims 9 or 10, wherein the portion of the individual data items is a first portion of the individual data items, and further comprising:
determining that the individual data sensitivity ratings of a second portion of the individual data items is more sensitive than the third data sensitivity rating of the secure data corridor, the third data sensitivity rating being a maximum threshold of sensitivity for transmission of data items through the secure data corridor; and
transmitting an indication to the subject indicating that content of the second portion of the individual data items cannot be securely transmitted through the secure data corridor.

12. One or more non-transitory computer-readable media storing computer-executable instructions, that when executed on one or more processors (404), causes the one or more processors to perform acts comprising:
receiving a message that includes a request from a subject (102) to access a set of data items associated with a first secure data container (114) wherein the subject is a user, a non-user entity, a second secure data container, or any other data structure that is capable of requesting access permissions to data feeds within a secure data container, and wherein a secure data container is a secure data structure that includes data items associated with the operation of an application;
identifying a set of permissions associated with the subject based at least in part on the message, the message including a set of access permissions that authorize the subject to access the set of data items having a first data sensitivity rating;
determining that the subject is authorized to access the first secure data container based on a comparison of the set of access permissions and a second data sensitivity rating associated with the first secure data container;
establishing a secure data corridor between the subject and the first secure data container, wherein the secure data corridor (116) is a communication channel used to transmit data feeds between the subject and the first secure data container, the secure data corridor having a third data sensitivity rating that is based at least in part on the first data sensitivity rating and the second data sensitivity rating;
detecting a data feed at an ingress point of the secure data corridor, the ingress point corresponding to an endpoint at the subject, whereby the incoming data feed is intended to transmit from the subject, via the secure data corridor, and to the adjoining first secure data container;
determining that a data sensitivity rating of the data feed is more sensitive than the third data sensitivity rating of the secure data corridor; and
in response to a determination that the data sensitivity rating of the data feed is more sensitive than the third data sensitivity rating of the secure data corridor, dynamically setting the third data sensitivity rating of the secure data corridor to be equal to that of the data feed.

13. A computer-readable media according to claim 12, further comprising:
generating a security label for individual data feeds that associate the individual data feeds with corresponding data elements, corresponding data objects, and assigned control parameters;
generating a linkage map-set of the individual data feeds that include a plurality of entries, wherein individual entries of the plurality of entries correspond to the security labels of the individual data feeds; and
auditing a data sensitivity of the individual data feeds being transmitted through the secure data corridor, the data sensitivity being based at least in part on security labels within the linkage map-set.

14. A computer-readable media according to claim 13, wherein an assigned control parameter of the assigned control parameters corresponds to a particular data sensitivity rating, the assigned control parameter further comprising of a permission lattice of an explicit read provision, an explicit write provision, an explicit import provision, and an explicit export provision that corresponds to the particular data sensitivity rating relative to other data sensitivity ratings.

## Patentansprüche

1. System einer Ressourcenverwaltungsplattform, aufweisend:
einen oder mehrere Prozessoren (404);
einen mit dem einen oder den mehreren Prozessoren verbundenen Speicher (406),
wobei der Speicher ein oder mehrere durch den einen oder die mehreren Prozessoren ausführbaren Module (410, 412, 414) aufweist, um:
Empfangen einer eine Anfrage von einem Subjekt (102) aufweisenden Nachricht, um auf einen Satz von einem ersten sicheren Datencontainer (114) zugeordneten Datenelementen zuzugreifen, wobei das Subjekt ein Benutzer, eine Nichtbenutzereinheit, ein zweiter sicherer Datencontainer oder jede andere Datenstruktur ist, die in der Lage ist, Zugriffsberechtigungen auf Datenfeeds innerhalb eines sicheren Datencontainers anzufordern, und wobei ein sicherer Datencontainer eine sichere Datenstruktur ist, die zu dem Betrieb einer Anwendung zugeordnete Datenelemente aufweist;
Identifizieren eines dem zumindest teilweise auf der Nachricht basierenden Subjekt zugeordneten Satzes an Berechtigungen, wobei die Nachricht einen Satz von Zugriffsberechtigungen aufweist, die das Subjekt berechtigen, auf den Satz von Datenelementen mit einer ersten Datensensitivitätseinstufung zuzugreifen;
Bestimmen, dass das Subjekt berechtigt ist, auf den ersten sicheren Datencontainer zuzugreifen, basierend auf einem Vergleich des Satzes von Zugriffsberechtigungen und einer zweiten Datensensitivitätseinstufung, die dem ersten sicheren Datencontainer zugeordnet ist;
Einrichten eines sicheren Datenkorridors zwischen dem Subjekt und dem ersten sicheren Datencontainer, wobei der sichere Datenkorridor (116) ein Kommunikationskanal ist, der verwendet wird, um Datenfeeds zwischen dem Subjekt und dem ersten sicheren Datencontainer zu übertragen, wobei der sichere Datenkorridor eine dritte Datensensitivitätseinstufung aufweist, die zumindest teilweise auf der ersten Datensensitivitätseinstufung und der zweiten Datensensitivitätseinstufung basiert;
Erfassen eines Datenfeeds an einem Eintrittspunkt des sicheren Datenkorridors, wobei der Eintrittspunkt einem Endpunkt an dem Subjekt entspricht, wobei der eingehende Datenfeed dazu bestimmt ist, von dem Subjekt über den sicheren Datenkorridor und zu dem angrenzenden ersten sicheren Datenbehälter zu übertragen;
Bestimmen, dass eine Datensensitivitätseinstufung des Datenfeeds sensitiver ist als die dritte Datensensitivitätseinstufung des sicheren Datenkorridors; und
als Reaktion auf eine Feststellung, dass die Datensensitivitätseinstufung des Datenfeeds sensitiver ist als die dritte Datensensitivitätseinstufung des sicheren Datenkorridors, dynamisch die Datensensitivitätseinstufung des sicheren Datenkorridors gleich derjenigen des Datenfeeds einzustellen.

2. System nach Anspruch 1, **dadurch gekennzeichnet, dass** der Satz von Datenelementen ein erster Satz von Datenelementen ist und die Nachricht eine erste Nachricht ist, wobei die erste Nachricht ferner eine Anfrage zum Eintritt eines zweiten Satzes von Datenelementen in den ersten sicheren Datencontainer aufweist, und wobei das eine oder die mehreren Module ferner durch den einen oder die mehreren Prozessoren ausführbar sind, um:
Bestimmen einer zusätzlichen, dem zweiten Satz von Datenelementen zugeordneten Datensensitivitätseinstufung;
Bestimmen, dass die zusätzliche Datensensitivitätseinstufung im Vergleich zur zweiten Datensensitivitätseinstufung des ersten sicheren Datencontainers sensitiver ist, wobei die zweite Datensensitivitätseinstufung ein maximaler Schwellenwert einer Sensitivität für den Eintritt des zweiten Satzes von Datenelementen in den ersten sicheren Datencontainer ist;
Bestimmen, dass die dritte Datensensitivitätseinstufung des sicheren Datenkorridors gesperrt ist; und
Übertragen einer zweiten Nachricht an das Subjekt, die anzeigt, dass der zweite Satz von Datenelementen nicht sicher durch den sicheren Datenkorridor übertragbar ist.

3. System nach Anspruch 1 oder 2, **dadurch gekennzeichnet, dass** die dem sicheren Datenkorridor zugeordnete dritte Datensensitivitätseinstufung, dynamisch so eingestellt wird, dass diese mindestens gleich der dem ersten sicheren Datencontainer zugeordneten ersten Datensensitivitätseinstufung ist.

4. System nach einem der vorhergehenden Ansprüche, **dadurch gekennzeichnet, dass** die dem sicheren Datenkorridor zugeordnete dritte Datensensitivitätseinstufung zumindest teilweise auf individuellen Datenfeeds an einem Eintrittspunkt oder einem Austrittspunkt des sicheren Datenkorridors zugeordneten individuellen Kontrollparametern basiert, wobei die individuellen Kontrollparameter zumindest über eine explizite Leseberechtigung, eine explizite Schreibberechtigung, eine explizite Importberechtigung oder eine explizite Exportberechtigung verfügen.

5. System nach Anspruch 4, **dadurch gekennzeichnet, dass** die individuellen Kontrollparameter zunächst einem oder mehreren Datenobjekten zugeordnet sind, wobei individuelle Datenobjekte des einen oder der mehreren Datenobjekte mit einem oder mehreren Datenelementen verknüpft sind, und wobei das eine oder die mehreren Datenelemente weiter mit den individuellen Datenfeeds über einen Konnektivitätsschema verknüpft sind.

6. System nach einem der vorhergehenden Ansprüche, **dadurch gekennzeichnet, dass** der Satz von Datenelementen ein erster Satz von Datenelementen ist, und wobei das eine oder die mehreren Module ferner durch den einen oder die mehreren Prozessoren ausführbar sind, um:
Bestimmen, dass die dem Subjekt zugeordnete erste Datensensitivitätseinstufung, weniger sensitiv ist im Vergleich zu der dem ersten sicheren Datencontainer zugeordneten zweiten Datensensitivitätseinstufung;
Bestimmen, dass das Subjekt nicht berechtigt ist, Datenelemente innerhalb des ersten sicheren Datencontainers zu lesen, basierend zumindest teilweise auf der ersten Datensensitivitätseinstufung und der zweiten Datensensitivitätseinstufung; und
Konfigurieren des sicheren Datenkorridors, um zu verhindern, dass der sichere Datenkorridor den ersten Satz an Datenelementendes ersten sicheren Datencontainers an das Subjekt übermittelt.

7. System nach einem der vorhergehenden Ansprüche, wobei der Satz von Daten ein erster Satz von Datenelementen ist und die Nachricht eine erste Nachricht ist, wobei die erste Nachricht ferner eine Anforderung zum Eintritt eines zweiten Satzes von Datenelementen in den ersten sicheren Datencontainer enthält, und wobei das eine oder die mehreren Module ferner durch den einen oder die mehreren Prozessoren ausführbar sind, um zu:
Bestimmen, dass die erste Datensensitivitätseinstufung, die mit dem Subjekt verbunden ist, weniger sensitiv ist im Vergleich zu der mit dem ersten sicheren Datencontainer verbundenen zweiten Datensensitivitätseinstufung;
Bestimmen, dass das Subjekt berechtigt ist, Datenelemente in den ersten sicheren Datencontainer zu schreiben, zumindest teilweise basierend auf einem Vergleich der ersten Datensensitivitätseinstufung und der zweiten Datensensitivitätseinstufung; und
Konfigurieren des sicheren Datenkorridors, um den zweiten Satz von Datenelementen von dem Subjekt zu dem sicheren Datenkorridor zu übertragen.

8. Computer-implementiertes Verfahren, das Folgendes umfasst:
unter der Steuerung von einem oder mehreren Prozessoren (404):
Empfangen einer eine Anfrage von einem Subjekt (102) aufweisenden Nachricht, um auf einen Satz von einem ersten sicheren Datencontainer (114) zugeordneten Datenelementen zuzugreifen, wobei das Subjekt ein Benutzer, eine Nichtbenutzereinheit, ein zweiter sicherer Datencontainer oder jede andere Datenstruktur ist, die in der Lage ist, Zugriffsberechtigungen auf Datenfeeds innerhalb eines sicheren Datencontainers anzufordern, und wobei ein sicherer Datencontainer eine sichere Datenstruktur ist, die zu dem Betrieb einer Anwendung zugeordnete Datenelemente aufweist;
Identifizieren eines dem zumindest teilweise auf der Nachricht basierenden Subjekt zugeordneten Satzes an Berechtigungen, wobei die Nachricht einen Satz von Zugriffsberechtigungen aufweist, die das Subjekt berechtigen, auf den Satz von Datenelementen mit einer ersten Datensensitivitätseinstufung zuzugreifen;
Bestimmen, dass das Subjekt berechtigt ist, auf den ersten sicheren Datencontainer zuzugreifen, basierend auf einem Vergleich des Satzes von Zugriffsberechtigungen und einer zweiten Datensensitivitätseinstufung, die dem ersten sicheren Datencontainer zugeordnet ist;
Einrichten eines sicheren Datenkorridors zwischen dem Subjekt und dem ersten sicheren Datencontainer, wobei der sichere Datenkorridor (116) ein Kommunikationskanal ist, der verwendet wird, um Datenfeeds zwischen dem Subjekt und dem ersten sicheren Datencontainer zu übertragen, wobei der sichere Datenkorridor eine dritte Datensensitivitätseinstufung aufweist, die zumindest teilweise auf der ersten Datensensitivitätseinstufung und der zweiten Datensensitivitätseinstufung basiert;
Erfassen eines Datenfeeds an einem Eintrittspunkt des sicheren Datenkorridors, wobei der Eintrittspunkt einem Endpunkt an dem Subjekt entspricht, wobei der eingehende Datenfeed dazu bestimmt ist, von dem Subjekt über den sicheren Datenkorridor und zu dem angrenzenden ersten sicheren Datenbehälter zu übertragen;
Bestimmen, dass eine Datensensitivitätseinstufung des Datenfeeds sensitiver ist als die dritte Datensensitivitätseinstufung des sicheren Datenkorridors; und
als Reaktion auf eine Feststellung, dass die Datensensitivitätseinstufung des Datenfeeds sensitiver ist als die dritte Datensensitivitätseinstufung des sicheren Datenkorridors, dynamisch die Datensensitivitätseinstufung des sicheren Datenkorridors gleich derjenigen des Datenfeeds einzustellen.

9. Verfahren nach Anspruch 8, ferner aufweisend:
Bestimmen der zumindest teilweise auf der Grundlage der mit dem Satz von Datenelementen verbundenen ersten Datensensitivitätseinstufung basierenden dritten Datensensitivitätseinstufung mittels eines Planungsalgorithmus;
Identifizieren von mit individuellen Datenelementen des Satzes von Datenelementen verbundenen Kontrollparametern;
Bestimmen individueller Datensensitivitätseinstufungen für die zumindest teilweise auf den Kontrollparametern basierenden individuellen Datenelemente,
Bestimmen, dass die individuellen Datensensitivitätseinstufungen eines Teils der individuellen Datenelemente, die zumindest gleich der dritten
Datensensitivitätseinstufung des sicheren Datenkorridors sind, wobei diese zumindest teilweise auf den Kontrollparametern basieren, die dem Teil der individuellen Datenelemente zugeordnet sind; und
Verursachen, dass der Teil der individuellen Datenelemente durch den zumindest teilweise der individuellen Datensensitivitätseinstufung basierenden sicheren Datenkorridor übertragen wird.

10. Verfahren nach Anspruch 9, **dadurch gekennzeichnet, dass** der Teil der individuellen Datenelemente ein erster Teil der individuellen Datenelemente ist, und ferner aufweist:
Bestimmen, dass die individuellen Datensensitivitätseinstufungen eines zweiten Teils der individuellen Datenelemente größer sind als die zweiten Datensensitivitätseinstufungen des sicheren Datenkorridors; und
dynamisches Einstellen der dritten Datensensitivitätseinstufungen des sicheren Datenkorridors, so dass sie mindestens gleich den individuellen Datensensitivitätseinstufungen des zweiten Teils der individuellen Datenelemente ist.

11. Verfahren nach Anspruch 9 oder 10, **dadurch gekennzeichnet, dass** der Teil der individuellen Datenelemente ein erster Teil der individuellen Datenelemente ist, und ferner aufweisend:
Bestimmen, dass die individuellen Datensensitivitätseinstufungen eines zweiten Teils der individuellen Datenelemente sensitiver sind als die dritte
Datensensitivitätseinstufungen des sicheren Datenkorridors, wobei die dritte Datensensitivitätseinstufungen ein maximaler Schwellenwert der Sensitivität ist für eine Übertragung von Datenelementen durch den sicheren Datenkorridor ist; und
Übertragen einer Anzeige an das Subjekt, die anzeigt, dass der Inhalt des zweiten Teils der individuellen Datenelemente nicht sicher durch den sicheren Datenkorridor übertragbar ist.

12. Ein oder mehrere nicht-transitorische computerlesbare Medien, die rechnerausführbare Anweisungen, die, wenn sie auf einem oder mehreren Prozessoren (404) ausgeführt werden, bewirken, dass der eine oder mehrere Prozessoren veranlassen, Handlungen auszuführen, die Folgendes aufweisen:
Empfangen einer eine Anfrage von einem Subjekt (102) aufweisenden Nachricht, um auf einen Satz von einem ersten sicheren Datencontainer (114) zugeordneten Datenelementen zuzugreifen, wobei das Subjekt ein Benutzer, eine Nichtbenutzereinheit, ein zweiter sicherer Datencontainer oder jede andere Datenstruktur ist, die in der Lage ist, Zugriffsberechtigungen auf Datenfeeds innerhalb eines sicheren Datencontainers anzufordern, und wobei ein sicherer Datencontainer eine sichere Datenstruktur ist, die zu dem Betrieb einer Anwendung zugeordnete Datenelemente aufweist;
Identifizieren eines dem zumindest teilweise auf der Nachricht basierenden Subjekt zugeordneten Satzes an Berechtigungen, wobei die Nachricht einen Satz von Zugriffsberechtigungen aufweist, die das Subjekt berechtigen, auf den Satz von Datenelementen mit einer ersten Datensensitivitätseinstufung zuzugreifen;
Bestimmen, dass das Subjekt berechtigt ist, auf den ersten sicheren Datencontainer zuzugreifen, basierend auf einem Vergleich des Satzes von Zugriffsberechtigungen und einer zweiten Datensensitivitätseinstufung, die dem ersten sicheren Datencontainer zugeordnet ist;
Einrichten eines sicheren Datenkorridors zwischen dem Subjekt und dem ersten sicheren Datencontainer, wobei der sichere Datenkorridor (116) ein Kommunikationskanal ist, der verwendet wird, um Datenfeeds zwischen dem Subjekt und dem ersten sicheren Datencontainer zu übertragen, wobei der sichere Datenkorridor eine dritte Datensensitivitätseinstufung aufweist, die zumindest teilweise auf der ersten Datensensitivitätseinstufung und der zweiten Datensensitivitätseinstufung basiert;
Erfassen eines Datenfeeds an einem Eintrittspunkt des sicheren Datenkorridors, wobei der Eintrittspunkt einem Endpunkt an dem Subjekt entspricht, wobei der eingehende Datenfeed dazu bestimmt ist, von dem Subjekt über den sicheren Datenkorridor und zu dem angrenzenden ersten sicheren Datenbehälter zu übertragen;
Bestimmen, dass eine Datensensitivitätseinstufung des Datenfeeds sensitiver ist als die dritte Datensensitivitätseinstufung des sicheren Datenkorridors; und
als Reaktion auf eine Feststellung, dass die Datensensitivitätseinstufung des Datenfeeds sensitiver ist als die dritte Datensensitivitätseinstufung des sicheren Datenkorridors, dynamisch die Datensensitivitätseinstufung des sicheren Datenkorridors gleich derjenigen des Datenfeeds einzustellen.

13. Computerlesbares Medium nach Anspruch 12, ferner aufweisend:
Erzeugen einer Sicherheitskennzeichnung für individuelle Datenfeeds, das die einzelnen Datenfeeds mit korrespondierenden Datenelementen, korrespondierenden Datenobjekten und zugewiesenen Kontrollparametern verknüpft;
Erzeugen eines Verbindungsabbildungssatzes der eine Vielzahl von Einträgen enthaltenden individuellen Datenfeeds, wobei individuellen Einträge der Vielzahl von Einträgen mit der Sicherheitskennzeichnung der individuelle Datenfeeds korrespondiert; und
Prüfen einer Datensensitivität der individuellen Datenfeeds, die durch den sicheren Datenkorridor übertragen werden, wobei die Datensensitivität zumindest teilweise auf den Sicherheitskennzeichnungen innerhalb des Verbindungsabbildungssatzes basiert.

14. Computerlesbares Medium nach Anspruch 13, **dadurch gekennzeichnet, dass** ein zugewiesener Kontrollparameter der zugewiesenen Kontrollparameter mit einer bestimmten Datensensitivitätseinstufung korrespondiert, wobei der zugewiesene Kontrollparameter ferner ein Berechtigungsnetz aus einer expliziten Leseberechtigung, einer expliziten Schreibberechtigung, einer expliziten Importberechtigung und einer expliziten Exportberechtigung aufweist, das der bestimmten Datensensitivitätseinstufung relativ zu anderen Datensensitivitätseinstufungen entspricht.

## Revendications

1. Système d'une plate-forme de gestion des ressources, comprenant :
un ou plusieurs processeurs (404) ;
de la mémoire (406) couplée à un ou plusieurs processeurs, la mémoire comprenant un ou plusieurs modules (410, 412, 414) qui sont exécutables par lesdits un ou plusieurs processeurs pour :
recevoir un message qui comprend une demande provenant d'un sujet (102) pour accéder à un ensemble d'éléments de données associés à un premier conteneur de données sécurisé (114) dans lequel le sujet est un utilisateur, une entité non utilisateur, un deuxième conteneur de données sécurisé ou une toute autre structure de données qui est capable de demander des autorisations d'accès à des flux de données dans un conteneur de données sécurisé, et dans lequel un conteneur de données sécurisé est une structure de données sécurisée qui comprend des éléments de données associés au fonctionnement d'une application ;
identifier un ensemble d'autorisations associées au sujet sur la base au moins en partie du message, le message comprenant un ensemble d'autorisations d'accès qui autorisent le sujet à accéder à l'ensemble d'éléments de données ayant un premier indice de sensibilité des données ;
déterminer le fait que le sujet est autorisé à accéder au premier conteneur de données sécurisé sur la base d'une comparaison de l'ensemble d'autorisations d'accès et d'un deuxième indice de sensibilité des données associé au premier conteneur de données sécurisé ;
établir un couloir de données sécurisé entre le sujet et le premier conteneur de données sécurisé, dans lequel le couloir de données sécurisé (116) est un canal de communication utilisé pour transmettre des flux de données entre le sujet et le premier conteneur de données sécurisé, le couloir de données sécurisé ayant un troisième indice de sensibilité des données qui est basé au moins en partie sur le premier indice de sensibilité des données et le deuxième indice de sensibilité des données ;
détecter un flux de données au niveau d'un point d'entrée du couloir de données sécurisé, le point d'entrée correspondant à un point d'extrémité au niveau du sujet, moyennant quoi le flux de données entrant est destiné à transmettre depuis le sujet, via le couloir de données sécurisé, et au premier conteneur de données sécurisé adjacent ;
déterminer le fait qu'un indice de sensibilité des données du flux de données est plus sensible que le troisième indice de sensibilité des données du couloir de données sécurisé ; et
en réponse à une détermination du fait que l'indice de sensibilité des données du flux de données est plus sensible que le troisième indice de sensibilité des données du couloir de données sécurisé, définir dynamiquement le troisième indice de sensibilité des données du couloir de données sécurisé pour qu'il soit égal à celui du flux de données.

2. Système selon la revendication 1, dans lequel l'ensemble d'éléments de données est un premier ensemble d'éléments de données et le message est un premier message, dans lequel le premier message comprend en outre une demande d'entrée d'un deuxième ensemble d'éléments de données dans le premier conteneur de données sécurisé, et
dans lequel lesdits un ou plusieurs modules sont en outre exécutables par lesdits un ou plusieurs processeurs pour :
déterminer un indice de sensibilité des données supplémentaire associé au deuxième ensemble d'éléments de données ;
déterminer le fait que l'indice de sensibilité des données supplémentaire est plus sensible que le deuxième indice de sensibilité des données du premier conteneur de données sécurisé, le deuxième indice de sensibilité des données étant un seuil maximum de sensibilité pour l'entrée du deuxième ensemble d'éléments de données dans le premier conteneur de données sécurisé ;
déterminer le fait que le troisième indice de sensibilité des données du couloir de données sécurisé est verrouillé ;
et
transmettre un deuxième message au sujet indiquant que le deuxième ensemble d'éléments de données ne peut pas transmettre de manière sécurisée via le couloir de données sécurisé.

3. Système selon la revendication 1 ou 2, dans lequel le troisième indice de sensibilité des données associé au couloir de données sécurisé est établi dynamiquement pour être au moins égal au premier indice de sensibilité des données associé au premier conteneur de données sécurisé.

4. Système selon l'une quelconque des revendications précédentes, dans lequel le troisième indice de sensibilité des données associé au couloir de données sécurisé est basé au moins en partie sur des paramètres de contrôle individuels associés à des flux de données individuels au niveau d'un point d'entrée ou au niveau d'un point de sortie du couloir de données sécurisé, les paramètres de contrôle individuels comprenant au moins une disposition parmi une disposition de lecture explicite, une disposition d'écriture explicite, une disposition d'importation explicite ou une disposition d'exportation explicite.

5. Système selon la revendication 4, dans lequel les paramètres de commande individuels sont initialement affectés à un ou plusieurs objets de données, dans lequel les objets de données individuels parmi lesdits un ou plusieurs objets de données sont liés à un ou plusieurs éléments de données, et un ou plusieurs éléments de données étant en outre liés aux flux de données individuels via un diagramme de connectivité.

6. Système selon l'une quelconque des revendications précédentes, dans lequel l'ensemble d'éléments de données est un premier ensemble d'éléments de données, et dans lequel lesdits un ou plusieurs modules sont en outre exécutables par lesdits un ou plusieurs processeurs pour :
déterminer le fait que le premier indice de sensibilité des données associé au sujet est moins sensible que le deuxième indice de sensibilité des données associé au premier conteneur de données sécurisé ;
déterminer le fait que le sujet n'est pas autorisé à lire des éléments de données dans le premier conteneur de données sécurisé, sur la base au moins en partie du premier indice de sensibilité des données et du deuxième indice de sensibilité des données ; et
configurer le couloir de données sécurisé pour empêcher le couloir de données sécurisé de transmettre le premier ensemble d'éléments de données du premier conteneur de données sécurisé au sujet.

7. Système selon l'une quelconque des revendications précédentes, dans lequel l'ensemble d'éléments de données est un premier ensemble d'éléments de données et le message est un premier message, dans lequel le premier message comprend en outre une demande d'entrée d'un deuxième ensemble d'éléments de données au premier conteneur de données sécurisé, et dans lequel lesdits un ou plusieurs modules sont en outre exécutables par lesdits un ou plusieurs processeurs pour :
déterminer le fait que le premier indice de sensibilité des données associé au sujet est moins sensible que le deuxième indice de sensibilité des données associé au premier conteneur de données sécurisé ;
déterminer le fait que le sujet est autorisé à écrire des éléments de données dans le premier conteneur de données sécurisé, sur la base au moins en partie de la comparaison du premier indice de sensibilité des données et du deuxième indice de sensibilité des données ; et
configurer le couloir de données sécurisé pour transmettre le deuxième ensemble d'éléments de données à partir du sujet au couloir de données sécurisé.

8. Procédé mis en œuvre par ordinateur, comprenant les étapes consistant à :
sous le contrôle d'un ou plusieurs processeurs (404) :
recevoir un message qui comprend une demande provenant d'un sujet (102) pour accéder à un ensemble d'éléments de données associés à un premier conteneur de données sécurisé (114) dans lequel le sujet est un utilisateur, une entité non utilisateur, un deuxième conteneur de données sécurisé, ou toute autre structure de données qui est capable de demander des autorisations d'accès à des flux de données dans un conteneur de données sécurisé, et dans lequel un conteneur de données sécurisé est une structure de données sécurisée qui comprend des éléments de données associés au fonctionnement d'une application ;
identifier un ensemble d'autorisations associées au sujet sur la base au moins en partie du message, le message comprenant un ensemble d'autorisations d'accès qui autorisent le sujet à accéder à l'ensemble d'éléments de données ayant un premier indice de sensibilité des données ;
déterminer le fait que le sujet est autorisé à accéder au premier conteneur de données sécurisé sur la base d'une comparaison de l'ensemble d'autorisations d'accès et d'un deuxième indice de sensibilité des données associé au premier conteneur de données sécurisé ;
établir un couloir de données sécurisé entre le sujet et le premier conteneur de données sécurisé, dans lequel le couloir de données sécurisé (116) est un canal de communication utilisé pour transmettre des flux de données entre le sujet et le premier conteneur de données sécurisé, le couloir de données sécurisé ayant un indice de sensibilité des données qui est basé au moins en partie sur le premier indice de sensibilité des données et le deuxième indice de sensibilité des données ;
détecter un flux de données au niveau d'un point d'entrée du couloir de données sécurisé, le point d'entrée correspondant à un point d'extrémité au niveau du sujet, le flux de données entrant étant destiné à transmettre à partir du sujet, via le couloir de données sécurisé, et au premier conteneur de données sécurisé adjacent ;
déterminer le fait qu'un indice de sensibilité des données du flux de données est plus sensible que le troisième indice de sensibilité des données du couloir de données sécurisé ; et
en réponse à une détermination du fait que l'indice de sensibilité des données du flux de données est plus sensible que le troisième indice de sensibilité des données du couloir de données sécurisé, définir dynamiquement le troisième indice de sensibilité des données du couloir de données sécurisé pour qu'il soit égal à celui du flux de données.

9. Procédé selon la revendication 8, comprenant en outre les étapes consistant à :
déterminer, via un algorithme de planification, le troisième indice de sensibilité des données sur la base au moins en partie du premier indice de sensibilité des données associé à l'ensemble d'éléments de données ;
identifier les paramètres de contrôle associés aux éléments de données individuels de l'ensemble d'éléments de données ;
déterminer des indices de sensibilité des données individuels pour les éléments de données individuels, sur la base au moins en partie des paramètres de commande ;
déterminer le fait que les indices de sensibilité des données individuels d'une partie des éléments de données individuels sont au moins égaux au troisième indice de sensibilité des données du couloir de données sécurisé, sur la base au moins en partie des paramètres de commande associés à la partie des éléments de données individuels ; et
provoquer la transmission de la partie des éléments de données individuels via le couloir de données sécurisé sur la base au moins en partie des indices de sensibilité des données individuels.

10. Procédé selon la revendication 9, dans lequel la partie des éléments de données individuels est une première partie des éléments de données individuels, et comprenant en outre les étapes consistant à :
déterminer le fait que les indices de sensibilité des données individuels d'une deuxième partie des éléments de données individuels sont supérieurs au deuxième indice de sensibilité des données du couloir de données sécurisé ; et
fixer dynamiquement le troisième indice de sensibilité des données du couloir de données sécurisé pour qu'il soit au moins égal aux indices de sensibilité des données individuels de la deuxième partie des éléments de données individuels.

11. Procédé selon les revendications 9 ou 10, dans lequel la partie des éléments de données individuels est une première partie des éléments de données individuels, et comprenant en outre les étapes consistant à :
déterminer le fait que les indices de sensibilité des données individuels d'une deuxième partie des éléments de données individuels sont plus sensibles que le troisième indice de sensibilité des données du couloir de données sécurisé, le troisième indice de sensibilité des données étant un seuil maximum de sensibilité pour la transmission des éléments de données via le couloir de données sécurisé ; et
transmettre une indication au sujet indiquant que le contenu de la deuxième partie des éléments de données individuels ne peut pas être transmis de manière sécurisée via le couloir de données sécurisé.

12. Un ou plusieurs supports lisibles par ordinateur non transitoires stockant des instructions exécutables par ordinateur, qui, lorsqu'ils sont exécutés sur un ou plusieurs processeurs (404), amènent lesdits un ou plusieurs processeurs à effectuer des actions consistant à :
recevoir un message qui comprend une demande provenant d'un sujet (102) pour accéder à un ensemble d'éléments de données associés à un premier conteneur de données sécurisé (114) dans lequel le sujet est un utilisateur, une entité non utilisateur, un deuxième conteneur de données sécurisé, ou toute autre structure de données qui est capable de demander des autorisations d'accès à des flux de données dans un conteneur de données sécurisé, et dans lequel un conteneur de données sécurisé est une structure de données sécurisée qui comprend des éléments de données associés au fonctionnement d'une application ;
identifier un ensemble d'autorisations associées au sujet sur la base au moins en partie du message, le message comprenant un ensemble d'autorisations d'accès qui autorisent le sujet à accéder à l'ensemble d'éléments de données ayant un premier indice de sensibilité des données ;
déterminer le fait que le sujet est autorisé à accéder au premier conteneur de données sécurisé sur la base d'une comparaison de l'ensemble d'autorisations d'accès et d'un deuxième indice de sensibilité des données associé au premier conteneur de données sécurisé ;
établir un couloir de données sécurisé entre le sujet et le premier conteneur de données sécurisé, dans lequel le couloir de données sécurisé (116) est un canal de communication utilisé pour transmettre des flux de données entre le sujet et le premier conteneur de données sécurisé, le couloir de données sécurisé ayant un troisième indice de sensibilité des données qui est basé au moins en partie sur le premier indice de sensibilité des données et le deuxième indice de sensibilité des données ;
détecter un flux de données au niveau d'un point d'entrée du couloir de données sécurisé, le point d'entrée correspondant à un point d'extrémité au niveau du sujet, le flux de données entrant étant destiné à transmettre à partir du sujet, via le couloir de données sécurisé, et au premier conteneur de données sécurisé adjacent ;
déterminer le fait qu'un indice de sensibilité des données du flux de données est plus sensible que le troisième indice de sensibilité des données du couloir de données sécurisé ; et
en réponse à une détermination du fait que l'indice de sensibilité des données du flux de données est plus sensible que le troisième indice de sensibilité des données du couloir de données sécurisé, définir dynamiquement le troisième indice de sensibilité des données du couloir de données sécurisé pour qu'il soit égal à celui du flux de données .

13. Support lisible par ordinateur selon la revendication 12, comprenant en outre les étapes consistant à :
générer une étiquette de sécurité pour des flux de données individuels qui associent les flux de données individuels avec des éléments de données correspondants, des objets de données correspondants et des paramètres de contrôle attribués ;
générer un ensemble de cartes de liaison des flux de données individuels qui comprennent une pluralité d'entrées, dans lequel les entrées individuelles parmi la pluralité d'entrées correspondent aux étiquettes de sécurité des flux de données individuels ; et
auditer une sensibilité des données des sources de données individuelles transmises via le couloir de données sécurisé, la sensibilité des données étant basée au moins en partie sur des étiquettes de sécurité dans l'ensemble de cartes de liaison.

14. Support lisible par ordinateur selon la revendication 13, dans lequel un paramètre de commande assigné parmi les paramètres de commande assignés correspond à un indice de sensibilité des données particulier, le paramètre de commande assigné comprenant en outre un treillis d'autorisation d'une disposition de lecture explicite, une disposition d'écriture explicite, une disposition d'importation explicite et une disposition d'exportation explicite qui correspond à l'indice de sensibilité des données particulier par rapport à d'autres indices de sensibilité des données.
